# EUROPÄISCHE PATENTANMELDUNG

(11) **EP 2 868 199 A1**
(43) Veröffentlichungstag der Anmeldung: **06.05.2015**
(21) Anmeldenummer: 13190667.9
(22) Anmeldetag: 29.10.2013
(51) Int. Cl.: A01N 59/02, A01N 25/34, A01N 25/10

(54) **Fungizid wirksame Schutzfolie**

(71) Anmelder: Mondi Consumer Packaging Technologies GmbH, 48599 Gronau (DE)
(72) Erfinder: Kohla, Michael, Dr., 48329 Havixbeck (DE); Siewert, Dana, 46399 Bocholt (DE); Perick, Matthias, 48683 Ahaus-Altstätte (DE)
(74) Vertreter: Lorenz, Bernd Ingo Thaddeus

(57) **Zusammenfassung**

Die Erfindung betrifft eine fungizid wirksame Schutzfolie mit einem säurebildenden Polymer und einem Disulfit. Erfindungsgemäß ist zumindest eine Folienschicht aufgeschäumt und weist durch das Aufschäumen gebildete Hohlräume (3) auf. Gegenstand der Erfindung sind auch ein Verfahren zur Herstellung der Schutzfolie durch mehrschichtige Coextrusion sowie die Verwendung der Schutzfolie zur Verpackung von Textil- und Lederwaren. - Zu veröffentlichen mit Fig. 1.

## Beschreibung

Die Erfindung betrifft eine fungizid wirksame Schutzfolie mit einem säurebildenden Polymer und einem Disulfit. Gegenstand der Erfindung sind auch ein Verfahren zur Herstellung der Schutzfolie sowie eine bevorzugte Verwendung der Schutzfolie.

Fungizid wirksame Schutzfolien sind insbesondere zur Verpackung von Lebensmitteln bekannt. Um Lebensmittel und insbesondere Früchte wie Tafeltrauben über einen weiten Weg ohne Beeinträchtigung transportieren zu können, ist es bekannt, diese in einer Atmosphäre mit fungizid wirksamen Substanzen zu transportieren.

Aus der Praxis sind verschiedene fungizid wirksame Kunststofferzeugnisse in Form von Verpackungen, Deckeln, Pads oder dergleichen bekannt.

Grundsätzlich kommen zwei unterschiedliche Arten einer fungiziden Wirkung in Betracht, nämlich einmal ein direkter Kontakt mit dem zu schützenden Gegenstand oder andererseits die Erzeugung einer Atmosphäre, in der eine fungizid wirksame Substanz als Gas enthalten ist.

Für die Verpackungen von Lebensmitteln sind beispielsweise aus der US 3 559 562 Pads bekannt, die in einer Verpackung angeordnet werden und welche Schwefeldioxid (SO₂) abgeben. Es ergibt sich dabei der Nachteil, dass die Abgabe von Schwefeldioxid bei einem solchen Pad nicht genau gesteuert werden kann und insbesondere auch von der Umgebungstemperatur abhängt. Eine zu große Abgabe von Schwefeldioxid kann zu einer Beschädigung, insbesondere einem Ausbleichen des verpackten Produktes führen, wobei unter Umständen auch gesundheitliche Beeinträchtigungen eines Benutzers nicht ausgeschlossen werden können. Des Weiteren besteht die Gefahr, dass der Pad nach bereits relativ kurzer Schutzdauer verbraucht ist.

Um über einen längeren Zeitraum eine gleichmäßige Abgaberate von Schwefeldioxid zu erreichen, ist aus der EP 1 117 599 B1 eine fungizid wirksame Schutzfolie als Verpackung bekannt, welche ein säurebildendes Polymer und ein Disulfit enthält.

Die Verpackungsfolie ist aus einem Polymergemisch hergestellt, welches Ethylenvinylacetat (EVA) als säurebildendes Polymer und ein anderes Polymer, insbesondere lineares Polyethylen, mit einer substantiell anderen Wassertransmissionsrate aufweist.

Als säurebildendes Polymer wird dabei im Rahmen der Erfindung ein Kunststoff verstanden, der in einer feuchten Umgebung oder mit Hilfe der umgebenden Luftfeuchtigkeit H+-Ionen freisetzt und somit eine saure Umgebung schafft.

In einer sauren Umgebung können die Disulfite, insbesondere Kaliumdisulfit und Natriumdisulfit, derart zersetzt werden, dass sich Schwefeldioxid bildet, welches eine fungizide Wirkung aufweist. Entsprechend werden Natriumdisulfit und Kaliumdisulfit auch als Lebensmittelzusatzstoffe mit den Bezeichnungen E223 und E224 verwendet, wobei die Substanzen bei einer hohen Konzentration reizend bzw. gesundheitsschädlich wirken.

Gemäß der EP 1 117 599 B1 ergibt sich der Vorteil, dass durch einen zweistufigen Prozess, nämlich die Erzeugung einer sauren Umgebung durch das säurebildende Polymer einerseits und die Zersetzung des Disulfits in saurer Umgebung andererseits ein vergleichsweise langsamer, langfristiger Prozess zur Abgabe von Schwefeldioxid erreicht wird. Insbesondere kann gemäß der EP 1 117 599 B1 die Bildungsrate von Schwefeldioxid auch dadurch beeinflusst werden, dass Ethylenvinylacetat als säurebildendes Polymer mit einem anderen Polymer abgemischt wird, welches eine abweichende Wassertransmissionsrate aufweist. Durch die Einstellung der Wassertransmissionsrate kann im Rahmen des beschriebenen Prozesses die Bildung einer sauren Umgebung durch das EVA beeinflusst werden.

Vor diesem Hintergrund liegt der vorliegenden Erfindung die Aufgabe zugrunde, eine fungizid wirksame Schutzfolie anzugeben, welche insbesondere im Hinblick auf die langfristige Abgabe von Schwefeldioxid noch weiter verbesserte Eigenschaften aufweist.

Ausgehend von einer fungizid wirksamen Schutzfolie mit den eingangs beschriebenen Merkmalen wird die Aufgabe erfindungsgemäß dadurch gelöst, dass zumindest eine Folienschicht der Schutzfolie durch ein Aufschäumen gebildete Hohlräume aufweist.

Durch die während der Extrusion bei einem Aufschäumen gebildeten Hohlräume kann sich das entstehende Schwefeldioxid innerhalb dieser Folienschicht ansammeln, wodurch eine Depot-Wirkung und hinsichtlich der Erzeugung und Abgabe von Schwefeldioxid auch eine gewisse Puffer-Wirkung erreicht wird. Die Abgabe des fungizid wirksamen Schwefeldioxids aus der Schutzfolie ist somit über einen längeren Zeitraum möglich, wobei zusätzlich auch Schwankungen der Umgebungsbedingungen weniger stark ins Gewicht fallen.

Das Aufschäumen der zumindest einen Folienschicht führt gegenüber einer ungeschäumten Folienschicht zu einer Volumenzunahme, die dem Gesamtvolumen der gebildeten Hohlräume entspricht. Umso stärker die Folienschicht aufgeschäumt wird, umso größer ist entsprechend auch die Depot-Wirkung durch die Hohlräume. Andererseits soll die Schutzfolie auch eine ausreichende Festigkeit und Stabilität aufweisen, wobei besonders bevorzugt die einzelnen Hohlräume nicht nach Art eines Schwammes offen und miteinander verbunden sind, wodurch sich das Schwefeldioxid in der aufgeschäumten Folienschicht nahezu frei bewegen könnte. So beträgt die Dichte der aufgeschäumten Folienschicht beispielsweise zwischen 0,1 g/cm³ und 0,9 g/cm³, vorzugsweise zwischen 0,2 und 0,8 g/cm³ und besonders bevorzugt zwischen 0,4 und 0,6 g/cm³.

Eine besonders gleichmäßige Anordnung der Hohlräume wird erreicht, wenn die aufgeschäumte Folienschicht eine feinzellige Schaumstruktur aufweist, die beispielsweise durch ein sogenanntes MuCell-Verfahren gebildet werden.

Der Kunststoffschmelze wird dabei während der Extrusion ein Treibmittel beigegeben, welches während der Extrusion bzw. unmittelbar nach dem Austritt aus einem Extrusionsspalt ein Aufschäumen bewirkt. Insbesondere kommt ein physikalisches Aufschäumen in Betracht, bei dem zunächst ein Treibmittel unter Druck der Schmelze beigegeben wird und sich dann bei dem Austritt der Schutzfolie aus dem Düsenspalt entspannt. Als Treibmittel sind insbesondere Stickstoff (N₂) und Kohlendioxid (CO₂) geeignet. Das Treibmittel kann vor dem Zudosieren als Gas oder als überkritisches Fluid vorliegen, welches die Inkompressibilität einer Flüssigkeit und die Lösungseigenschaften eines Gases vereint. Des Weiteren kann auch Wasser als Treibmittel vorgesehen werden, wobei sich dann auch der Vorteil ergibt, dass hinsichtlich der Erzeugung einer sauren Umgebung durch die Zersetzung des säurebildenden Polymers nach der Herstellung der Schutzfolie bereits eine ausreichende Menge an Wasser bzw. Feuchtigkeit vorhanden ist.

Das Treibmittel geht in dem Extruder mit der Polymerschmelze in Lösung und bildet dort verteilt ein Einphasensystem mit der Kunststoffschmelze. Durch einen schnellen Druckabfall beim Austritt aus der Extrusionsdüse bilden sich in der Polymerschmelze Nukleierungskeime. Das Gas bzw. Wasserdampf löst sich kontrolliert aus der Schmelze heraus, wobei eine sehr feine, gleichmäßige Schaumstruktur gebildet wird. Ein entsprechendes Verfahren wird unter anderem in US 6 051 174 beschrieben.

Um bei dem Aufschäumen eine möglichst gleichmäßige Bildung kleinster Zellen zu ermöglichen, kann die aufgeschäumte Schicht eine Beimischung aus Partikeln enthalten, die beim Extrusionsprozess eine Zellenbildung erleichtern und deshalb auch als Nukleierungsmittel bezeichnet werden. Eine solche Beimischung aus Partikeln kann beispielsweise aus Talkum bestehen oder Talkum als Hauptbestandteil aufweisen.

Für die weitere Ausgestaltung der fungizid wirksamen Schutzfolie ergeben sich im Rahmen der Erfindung verschiedene Möglichkeiten. So kann die Schutzfolie grundsätzlich auch als Monofolie gefertigt werden, welche nur aus der aufgeschäumten Folienschicht besteht.

Gemäß einer bevorzugten Ausgestaltung der Erfindung weist die Schutzfolie jedoch einen mehrschichtig coextrudierten Aufbau mit besonders bevorzugt drei oder vier Schichten auf.

Bei einem mehrschichtigen Aufbau können das säurebildende Polymer und das Disulfit grundsätzlich in verschiedenen Folienschichten enthalten sein. Vorzugsweise sind das säurebildende Polymer und das Disulfit jedoch gemeinsam in einer Folienschicht enthalten. Bei dieser Folienschicht kann das säurebildende Polymer, also insbesondere EVA, die einzige Polymerkomponente sein oder in Mischungen mit einem anderen Polymer, beispielsweise Polyethylen, vorhanden sein. Bei der Abmischung mit einem weiteren Polymer, insbesondere einem Polyolefin, können insgesamt geringe Produktionskosten erreicht werden, wobei durch die Mischung auch die Durchlässigkeit für Wasser eingestellt werden kann.

Sofern das säurebildende Polymer in der entsprechenden Schicht mit einem weiteren Polymer gemischt ist, beträgt der Anteil des säurebildenden Polymers vorzugsweise zwischen 5 und 50 Gew.-% bei einem Anteil des Disulfits zwischen 10 und 30 Gew.-%. Die Anteile sind unter Berücksichtigung der gewünschten Abgaberate und des gewünschten Abgabezeitraums auszuwählen. Je nach Einsatz der Schutzfolie ist unter Umständen auch zu berücksichtigen, dass gerade in geschlossenen Räumen, Behältern oder Containern eine zu hohe Konzentration von Schwefeldioxid vermieden wird.

Die Bestandteile des säurebildenden Polymers müssen unter Einfluss von Feuchtigkeit stark genug dissoziiert sein, um bei den in der Schutzfolie vorliegenden Bedingungen eine beschleunigte Umsetzung von Disulfit in Schwefeldioxid zu ermöglichen. Vor diesem Hintergrund wird vorzugsweise ein säurebildendes Polymer eingesetzt, welches eine Säurekonstante von weniger als 5 aufweist. Die auch als pKₛ-Wert bezeichnete Säurekonstante ist eine Gleichgewichtskonstante, welche ein Maß für die Stärke einer Säure ist.

Neben dem im Rahmen der Erfindung besonders bevorzugten Ethylenvinylacetat (EVA) kommen auch andere säurebildende Polymere wie Ethylenmethacrylsäureester (EMA), Ethylenbutylacrylat (EBA) und Ethylenacrylsäure (EAA) in Betracht.

Grundsätzlich kann Disulfit auch in einem geringen Maße direkt mit Wasser zu Schwefeldioxid umgesetzt werden, allerdings werden im Rahmen der Erfindung erst durch das säurebildende Polymer geeignete Bildungsraten erreicht.

Bei einem mehrschichtigen, zumindest dreischichtigen Aufbau, ist die das säurebildende Polymer und das Disulfit enthaltene Folienschicht vorzugsweise als Kernschicht zwischen zwei Außenschichten angeordnet. Es ergibt sich dann eine funktionelle Aufteilung, wonach die Kernschicht für die Produktion des fungizid wirksamen Schwefeldioxids verantwortlich ist, während die Kernschicht durch die Außenschichten geschützt ist. Die Außenschichten stellen dabei auch eine Diffusionsbarriere dar, welche in ihrer Durchlässigkeit auf den gewünschten Abgabezeitraum eingestellt ist. Darüber hinaus kann durch die Außenschichten auch ein direkter Kontakt des in der Kernschicht enthaltenen Disulfits mit einem verpackten Gegenstand vermieden werden.

Die Außenschichten können auch dazu eingesetzt werden, um der gesamten Schutzfolie gewünschte mechanische Eigenschaften oder auch weitere funktionelle Eigenschaften wie eine gute Heißsiegelbarkeit oder dergleichen zu verleihen.

Im Rahmen einer solchen Ausgestaltung kann zumindest eine der beiden Außenschichten oder die Kernschicht aufgeschäumt sein. Bei einem Aufschäumen der Außenschichten kann das Schwefeldioxid nach seiner Bildung in der Kernschicht bei seinem Weg durch die Außenschichten in den Hohlräumen aufgenommen und gelagert werden.

Bevorzugt ist jedoch eine Ausgestaltung, bei der die Kernschicht aufgeschäumt ist, weil dann sich auch hinsichtlich der Bildung von Schwefeldioxid eine vergrößerte Oberfläche ergibt. Darüber hinaus sind dann die ungeschäumten Außenschichten glatt, wodurch sich besonders gute Funktionseigenschaften der Schutzfolie ergeben.

Bei dem beschriebenen dreischichtigen Aufbau kann die Dicke der Kernschicht beispielsweise zwischen 30 µm und 300 µm, und insbesondere zwischen 50 µm und 150 µm betragen, während die beiden Außenschichten üblicherweise dünner, beispielsweise mit einer Dicke zwischen 10 µm und 40 µm ausgeführt werden. Um insgesamt günstige Herstellungskosten zu ermöglichen, werden die Außenschichten vorzugsweise aus einem Polyolefin, insbesondere Polyethylen gebildet. Besonders geeignet ist beispielsweise eine Mischung aus Polyethylen niedriger Dichte (PE-LD) und linearem Polyethylen niedriger Dichte (PE-LLD). Die genannten Materialien können als auch Beimischung in der Kernschicht vorhanden sein. Die Gesamtdicke der Schutzfolie kann zwischen 50 µm und 400 µm, insbesondere zwischen 70 µm und 230 µm betragen. Die Schutzfolie ist üblicherweise biegsam und zumindest durch das Aufschäumen eingetrübt. Grundsätzlich kann die Schutzfolie auch opak oder durch die Zugabe von Pigment undurchscheinend eingefärbt sein.

Als Disulfit wird vorzugsweise Kaliumdisulfit eingesetzt, welches in einer sauren Umgebung Schwefeldioxid freisetzt.

Gegenstand der Erfindung ist auch ein Verfahren zur Herstellung der beschriebenen Schutzfolie durch mehrschichtige Coextrusion, wobei ein Disulfit und ein säurebildendes Polymer einem Compound für eine der Folienschichten beigegeben werden, wobei dem das Disulfit und das säurebildende Polymer enthaltenen Compound in einem Extruder ein Treibmittel beigegeben wird und wobei der Austritt der Schutzfolie aus einem Extrusionsspalt im schmelzflüssigen Zustand ein Aufschäumen der mit Treibmittel versehenen Folienschicht bewirkt. Wie zuvor beschrieben, kann auch eine Flüssigkeit, insbesondere Wasser, als Treibmittel vorgesehen sein. Es ergibt sich dann der Vorteil, dass bereits in der Schutzfolie und insbesondere den durch das Aufschäumen gebildeten Hohlräumen eine gewisse Menge an Wasser vorhanden ist.

Gegenstand der Erfindung ist auch die Verwendung der Schutzfolie zum Verpacken von Textil- und Lederwaren.

Durch die erfindungsgemäße Ausgestaltung der Schutzfolie mit einer langen Depot- und Reservoir-Wirkung können auch Bekleidung und Schuhe sowie weitere Lederwaren über einen längeren Zeitraum, insbesondere während eines Seetransportes, gegen Schimmelbefall geschützt werden.

Es ergeben sich dabei verschiedene Varianten, wie Schuhe oder andere Lederprodukte sowie Textilien geschützt werden können. Zunächst kann die erfindungsgemäße Folie als einfache Einschlagfolie um das zu schützende Produkt gelegt werden. So ist beispielsweise bekannt, Schuhe in Papier einzuschlagen, welches beispielsweise durch die erfindungsgemäße Schutzfolie ersetzt wird.

Da die Schutzfolie aus thermoplastischem Polymer gebildet ist, ist die Schutzfolie üblicherweise auch heißsiegelbar. Dies trifft insbesondere dann zu, wenn bei einem mehrschichtigen Aufbau die Außenschichten ungeschäumt sind und aus Polyolefin bestehen. Es kann also eine Art Beutel durch Heißsiegeln gebildet werden, der das schützende Produkt aufnimmt. Beispielsweise kann ein zu schützendes Textil auch sichtbar in einem aus der Schutzfolie gebildeten Beutel angeordnet werden, welche gegebenenfalls sogar als Verkaufsverpackung geeignet ist.

Darüber hinaus kann die Schutzfolie auch in die zu schützenden Gegenstände eingelegt werden. Beispielsweise können Schuhe, Handtaschen oder dergleichen mit der Schutzfolie ausgepolstert werden. Bei Kleidungsstücken kann die Schutzfolie in Taschen eingesetzt oder anderweitig als Einlage vorgesehen sein.

Schließlich kann es auch ausreichend sein, wenn die Schutzfolie lediglich benachbart zu dem zu schützenden Gegenstand angeordnet wird. Beispielsweise kann die Schutzfolie auch in einen Schuhkarton oder eine andere Umverpackung separat eingelegt werden.

Die Erfindung wird im Folgenden anhand einer lediglich ein Ausführungsbeispiel darstellenden Zeichnung erläutert; es zeigen:
- Fig. 1 bis Fig. 3: unterschiedliche Ausgestaltungen einer fungizid wirksamen Schutzfolie,
- Fig. 4: Schuhe, die in einer Schutzfolie eingeschlagen sind,
- Fig. 5: Schuhe, die gemeinsam mit einem Abschnitt der Schutzfolie in einem Karton angeordnet sind.

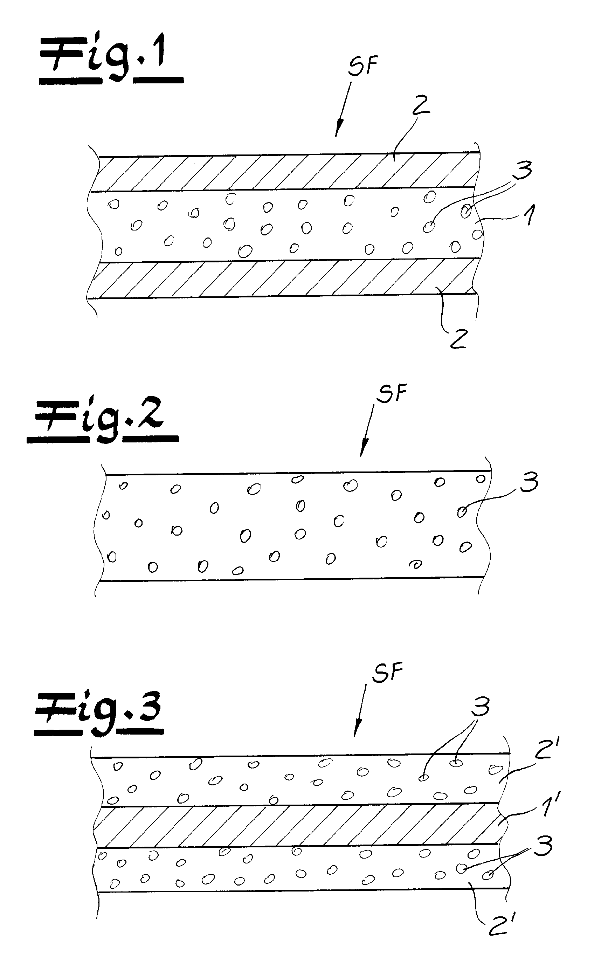

Die Fig. 1 zeigt eine bevorzugte, mehrschichtige Ausgestaltung einer Schutzfolie SF, welche durch Coextrusion gebildet ist. Bei einem symmetrischen Aufbau ist eine Kernschicht 1 zwischen zwei Außenschichten 2 angeordnet. Die Kernschicht 1 enthält ein säurebildendes Polymer, insbesondere Ethylenvinylacetat (EVA) und ein Disulfit, insbesondere Kaliumdisulfit oder Natriumdisulfit. Des Weiteren ist die Kernschicht 1 aufgeschäumt, so dass innerhalb der Kernschicht 1 Hohlräume 3 gebildet sind.

Die Kombination des säurebildenden Polymers mit dem Disulfit ermöglicht über einen langen Zeitraum eine Bildung von Schwefeldioxid als fungizid wirksamen Gas in einer sauren Umgebung, wozu für die Bildung von H+-Ionen eine ausreichende Menge an Wasser bzw. Feuchtigkeit vorhanden sein muss, wobei Wasser beispielsweise aus der Umgebung in die Kernschicht 1 eindiffundieren kann.

Die Hohlräume 3 werden bei einem Extrusionsprozess gebildet, wobei dem Compound für die Kernschicht 1 zusätzlich zu dem säurebildenden Polymer und dem Disulfit ein Treibmittel zugegeben wird. Bei dem Austritt der Extrusionsfolie aus einem Extrusionsspalt bewirkt das Treibmittel ein Aufschäumen, wodurch die Hohlräume 3 gebildet werden. Eine besonders gleichmäßige, kleinzellige Struktur kann dadurch erreicht werden, dass dem Compound für die Kernschicht 1 auch ein Nukleierungsmittel, beispielsweise Talkum, zugegeben wird.

Die in der Fig. 1 dargestellte Schutzfolie weist gemäß einem konkreten Ausführungsbeispiel Außenschichten 2 mit einer Dicke von 25 µm auf, die jeweils zur Hälfte aus PE-LLD und PE-LD bestehen.

Die Kernschicht 1 mit einer Dicke von 90 µm im aufgeschäumten Zustand enthält 20 Gew.-% Kaliumdisulfit, 37 Gew.-% PE-LLD, 13 % Talkum als Nukleierungsmittel für den Aufschäumprozess, 10 % PE-LD und 20 % EVA als säurebildenden Polymer. Ohne die Volumenzunahme durch das Aufschäumen, also bei einer Schicht aus gleichem Material ohne Hohlräume, würde sich bei dem gleichen Materialeinsatz eine Dicke von 50 µm ergeben.

Die Fig. 2 zeigt eine alternative Ausgestaltung, bei der die Schutzfolie SF als Monofolie ausgestaltet ist. Die Monofolie enthält wie zuvor beschrieben ein säurebildendes Polymer und ein Disulfit, wobei das säurebildende Polymer grundsätzlich auch die einzige Polymerkomponente der Monofolie bzw. der Kernschicht 1 gemäß der Fig. 1 sein kann.

Die Fig. 3 zeigt schließlich eine weitere Variante, bei der das Disulfit und das säurebildende Polymer ebenfalls in de Kernschicht 1' vorhanden sind, während allerdings die beiden Außenschichten 2' durch ein Aufschäumen gebildete Hohlräume 3 aufweisen. Schwefeldioxid (SO₂) wird dann in der Kernschicht 1' erzeugt, kann aber bei der Diffusion durch die beidseitig angeordneten Außenschichten 2' in den Hohlräumen 3 aufgenommen und zwischengespeichert werden.

Die erfindungsgemäße Schutzfolie SF wird gemäß einem weiteren Aspekt der vorliegenden Erfindung zur Verpackung von Textil- und Lederwaren eingesetzt.

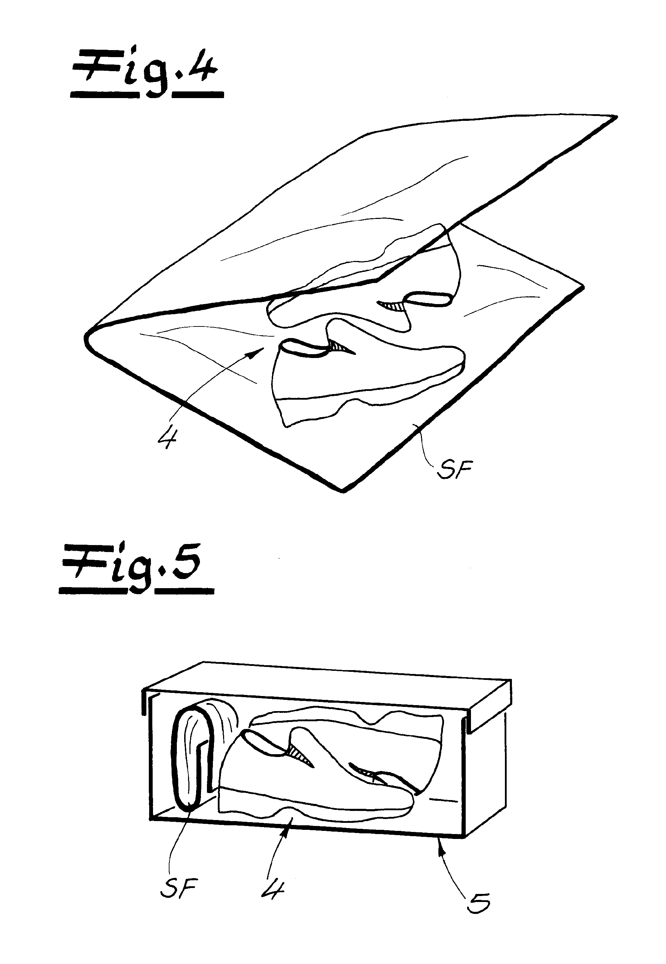

Gemäß der Fig. 4 kann die fungizid wirksame Schutzfolie beispielsweise als eine Art Einschlagfolie vorgesehen sein, um ein zu schützendes Produkt, in dem Ausführungsbeispiel Schuhe 4, aufzunehmen. Es ergibt sich dann der Vorteil, dass die Schutzfolie SF auch einen gewissen mechanischen Schutz erlaubt, wobei insbesondere bei einem mehrschichtigen Aufbau gemäß der Fig. 1 ein direkter Kontakt des zu schützenden Produktes mit dem Disulfit vermieden werden kann. Da des Weiteren auch nur eine gleichmäßige, relativ geringe Konzentration von Schwefeldioxid abgegeben wird, können auch Beeinträchtigungen der Oberfläche, eine Gefährdung eines Benutzers oder dergleichen, sicher vermieden werden.

Die Fig. 5 zeigt eine alternative Ausgestaltung zum Verpacken von Textil- und Lederwaren mit der Schutzfolie SF, wobei die Schutzfolie SF zusammen mit dem zu schützenden Gegenstand, also beispielsweise Schuhen 4, in einer Umverpackung, beispielsweise einem Karton 5 angeordnet ist.

## Patentansprüche

1. Fungizid wirksame Schutzfolie (SF) mit einem säurebildenden Polymer und einem Disulfit, **gekennzeichne**t **durch** zumindest eine Folienschicht, die durch ein Aufschäumen gebildete Hohlräume (3) aufweist.

2. Schutzfolie (SF) nach Anspruch 1, **dadurch gekennzeichnet, dass** die aufgeschäumte Folienschicht eine Dichte zwischen 0,1 g/cm³ und 0,9 g/cm³ aufweist.

3. Schutzfolie (SF) nach Anspruch 1 oder 2, **dadurch gekennzeichnet, dass** das säurebildende Polymer eine Säurekonstante pKₛ von weniger als 5 aufweist.

4. Schutzfolie (SF) nach einem der Ansprüche 1 bis 3, **dadurch gekennzeichnet, dass** das säurebildende Polymer ein Polymer aus der Gruppe Ethylenvinylacetat (EVA), Ethylenmethacrylatsäureester (EMA), Ethylenbutylacrylat (EBA) und Ethylenacrylsäure (EAA) ist.

5. Schutzfolie (SF) nach einem der Ansprüche 1 bis 4, **gekennzeichnet durch** einen mehrschichtig coextrudierten Aufbau.

6. Schutzfolie (SF) nach Anspruch 5, **dadurch gekennzeichnet, dass** das säurebildende Polymer und das Disulfit in verschiedenen Folienschichten enthalten sind.

7. Schutzfolie (SF) nach Anspruch 5, **dadurch gekennzeichnet, dass** das säurebildende Polymer und das Disulfit gemeinsam in einer Folienschicht enthalten sind.

8. Schutzfolie (SF) nach Anspruch 7, **dadurch gekennzeichnet, dass** in der gemeinsamen Folienschicht der Anteil des säurebildenden Polymers zwischen 5 Gew.-% und 20 Gew.-% und der Anteil des Disulfits zwischen 10 Gew.-% und 30 Gew.-% beträgt.

9. Schutzfolie (SF) nach Anspruch 7 oder 8, **dadurch gekennzeichnet, dass** die das säurebildende Polymer und das Disulfit enthaltende Folienschicht aufgeschäumt ist.

10. Schutzfolie (SF) nach Anspruch 9, **dadurch gekennzeichnet, dass** bei einem zumindest dreischichtigen Aufbau die das säurebildende Polymer und das Disulfit enthaltende Folienschicht als Kernschicht (1) zwischen zwei Außenschichten (2) angeordnet ist.

11. Schutzfolie (SF) nach Anspruch 10, **dadurch gekennzeichnet, dass** die Kernschicht (1) eine Dicke zwischen 30 µm und 300 µm aufweist.

12. Schutzfolie (SF) nach Anspruch 10 oder 11, **dadurch gekennzeichnet, dass** die Kernschicht (1) eine Polymermischung aus dem säurebildenden Polymer und einem Polyolefin aufweist.

13. Schutzfolie (SF) nach einem der Ansprüche 10 bis 12, **dadurch gekennzeichnet, dass** die Außenschichten (2) aus Polyolefin gebildet sind.

14. Schutzfolie (SF) nach einem der Ansprüche 1 bis 13, **dadurch gekennzeichnet, dass** als Disulfit Kaliumdisulfit eingesetzt wird.

15. Verfahren zur Herstellung einer fungizid wirksamen Schutzfolie (SF) nach einem der Ansprüche 1 bis 14 durch mehrschichtige Coextrusion,
wobei ein Disulfit und ein säurebildendes Polymer einem Compound für eine der Folienschichten beigegeben werden,
wobei dem das Disulfit und das säurebildende Polymer enthaltenden Compound in einem Extruder ein Treibmittel beigegeben wird und
wobei der Austritt der Schutzfolie (SF) aus einem Extrusionsspalt im schmelzflüssigen Zustand ein Aufschäumen der mit dem Treibmittel versehenen Folienschicht bewirkt.

16. Verwendung einer Schutzfolie nach einem der Ansprüche 1 bis 14 zur Verpackung von Textil- und Lederwaren.
